# EUROPÄISCHE PATENTSCHRIFT

(11) **EP 1 946 481 B1**
(45) Veröffentlichungstag und Bekanntmachung des Hinweises auf die Patenterteilung: **12.01.2011**
(21) Anmeldenummer: 06804379.3
(22) Anmeldetag: 08.11.2006
(51) Int. Cl.: H04L 9/32

(54) **VERFAHREN ZUR ERZEUGUNG EINER FORTGESCHRITTENEN ELEKTRONISCHEN SIGNATUR EINES ELEKTRONISCHEN DOKUMENTS**
METHOD FOR GENERATING AN ADVANCED ELECTRONIC SIGNATURE FOR AN ELECTRONIC DOCUMENT
DISPOSITIF DE RÉALISATION D UNE SIGNATURE ÉLECTRONIQUE AMÉLIORÉE D UN DOCUMENT ÉLECTRONIQUE

(30) Priorität: 09.11.2005 AT 18312005
(43) Veröffentlichungstag der Anmeldung: 23.07.2008
(73) Patentinhaber: xyzmo Software GmbH, 4052 Ansfelden (AT)
(72) Erfinder: SIEBERER, Walter, A-4060 Leonding (AT)
(74) Vertreter: Secklehner, Günter
(86) Internationale Anmeldenummer: PCT/AT2006/000453
(87) Internationale Veröffentlichungsnummer: WO 2007/053864

(56) Entgegenhaltungen:
- GB-A- 2 391 438
- US-A- 5 214 702
- US-B1- 6 959 382
- HEIKO ROSSNAGEL: "Mobile Qualified Electronic Signatures and Certification on Demand" EUROPKI, 2004, Seiten 274-286, XP019007633

## Beschreibung

Die Erfindung betrifft ein Verfahren zur fortgeschrittenen elektronischen Signierung eines elektronischen Dokuments gemäß dem Oberbegriff des Anspruchs 1.

Die Erfindung betrifft weiters ein Verfahren zur Prüfung eines gemäß dem oben angegebenen Verfahren elektronisch signierten elektronischen Dokuments, gemäß dem Oberbegriff des Anspruchs 11.

Zur Erleichterung der elektronischen Kommunikation und des elektronischen Geschäftsverkehrs hat das Europäische Parlament und der Rat am 13. Dezember 1999 der EU eine Richtlinie (RL 1999/93/EG) über gemeinschaftliche Rahmenbedingungen für elektronische Signaturen erlassen.

Als **"elektronische Signatur"** sind Daten in elektronischer Form definiert, die anderen elektronischen Daten beigefügt und logisch mit ihnen verknüpft sind und die zur Authentifizierung dienen.

Darüber hinaus ist eine **"fortgeschrittene elektronische Signatur"** als eine Signatur definiert, die ausschließlich dem Unterzeichner zugeordnet ist, die Identifizierung des Unterzeichners ermöglicht, mit Mitteln erstellt wird, die der Unterzeichner unter seiner alleinigen Kontrolle halten kann, und die so mit den Daten, auf die sie sich bezieht, verknüpft ist, dass eine nachträgliche Veränderung der Daten erkannt werden kann.

Der **"Unterzeichner"** bzw. **"Signator"** ist eine Person, die eine **"Signaturerstellungseinheit",** d.h. konfigurierte Software oder Hardware, die zur Implementierung von Signaturerstellungsdaten verwendet wird, besitzt, wobei die **"Signaturerstellungsdaten"** einmalige Daten wie Codes oder private kryptographische Schlüssel umfassen, die vom Unterzeichner zur Erstellung einer elektronischen Signatur verwendet werden.

Mittels **"Signaturprüfdaten",** die Daten wie Codes oder öffentliche kryptographische Schlüssel umfassen, kann eine Überprüfung einer elektronischen Signatur vorgenommen und ein **"Zertifikat"** ausgestellt werden, das ist eine elektronische Bescheinigung, mit der Signaturprüfdaten einer Person zugeordnet werden und die Identität dieser Person bestätigt wird.

Im Kontext der zitierten EU-Richtlinie 1999/93/EG liegt die vorliegende Erfindung auf dem Gebiet der "fortgeschrittenen elektronischen Signatur".

Bei den bisher bekannten Lösungen zur Erstellung einer fortgeschrittenen elektronischen Signatur benötigt jeder Unterzeichner sein eigenes Zertifikat / Schlüsselpaar (z.B. in einer SmartCard gespeichert), das ihm 1 m Zuge der Registrierung bei einem Zertifizierungsdiensteanbieter ausgehändigt wird. Z.B wird bei Public-Key-Infrastrukturen, die auf X.509 basieren, ein solches Zertifikat in der Regel zu Beginn der Geschäftsbeziehung zwischen Signator und Zertifizierungsdiensteanbieter ausgestellt und in weiterer Folge vom Signator ohne Interaktion mit dem Zertifizierungsdiensteanbieter verwendet.

Beispielsweise zeigt die US 5,214,702 A ein Kryptografisches "public-key" System, welches eine hierarchische Struktur abhängiger Zertifikate und Unterschriften ausbildet, um somit die Autorität bzw. Zuständigkeitsverhältnisse des Signierers festlegen zu können. Ferner ist zur digitalen Signatur von Dokumenten eine Methode offenbart, bei der die digitale Signatur sowohl eine automatisierte Prüfung durch ein Computersystem ermöglicht, als auch eine Prüfung einer zu Papier gebrachten Form des Dokumentes möglich ist. Das Dokument offenbart ferner eine Zertifizierungsmethode die eine Mehrzahl unterschiedlicher und ggf. voneinander abhängiger Zertifizierungsstufen ermöglicht, wobei gleichzeitig die Autorität der signierenden Person sichergestellt ist. Im offenbarten Zertifikat kann auch einen Geldwertbetrag hinterlegt sein, über welchen eine Person der dieses Zertifikat zugeordnet ist, verfügen kann. Somit lässt sich stets feststellen, ob eine Person die einen spezifischen Auftrag erteilt hat, einen Auftrag über diese Auftragssumme durchzuführen berechtigt ist. Ferner ist offenbart, dass eine gemeinsame Signierung eines Dokuments durch mehrere Personen gefordert werden kann, bzw. dass ein so genanntes Gegenzeichnen erforderlich ist. Ein Dokument kann daher parallel von mehreren Personen signiert werden, wobei aufgrund Abhängigkeiten zwischen den Signaturen jeder Unterzeichner implizit die anderen Unterzeichnenden authentifiziert. Ferner kann beim Gegenzeichnen eine Zeichnungshistorie bzw. eine hierarchische Struktur erforderlicher Signaturen ausgebildet werden. Ferner offenbart das Dokument eine Ausbildung der Signatur dahingehend, dass Benutzern bestimmte Rechte eingeräumt werden können, beispielsweise das Recht, Zertifikate anderer Benutzer aufzuheben.

Aus der Schrift "Mobile Qualified Electronic Signatures and Certification on Demand" EuroPKI 2004, Seiten 274-286, ist ein Signaturverfahren bekannt, dass die Direktive 1999/93/EC des europäischen Parlaments hinsichtlich fortgeschrittener elektronischer Signaturen erfüllt. Danach muss eine elektronische Signatur eindeutig einem Unterzeichner zugeordnet werden können und diesen eindeutig identifizieren können, ferner muss die Signatur unter ausschließlicher Kontrolle des Unterzeichners generiert werden und derart mit der Information verknüpft sein, dass eine nachfolgende Änderung des Informationsgehalts erkennbar ist. Die Schrift offenbart eine mobile Kommunikationseinrichtung die dazu ausgebildet ist, elektronische Signaturen zu generieren, insbesondere so genannte mobile Signaturen, welche dem Besitzer einer mobilen Kommunikationseinrichtung eine standortunabhängige und insbesondere mobile Möglichkeit zur Generierung einer fortschrittlichen Signatur bietet. Dazu ist beispielsweise auf einer SIM-Karte eines mobilen Kommunikationsnetzbetreibers ein Schlüsselgenerator für ein oder mehr Schlüsselpaare vorhanden. Nachdem der Benutzer die SIM-Karte vom Mobilnetzbetreiber erhalten hat, kann der Benutzer die Signaturkomponenten aktivieren und so seine spezifischen öffentlichen Schlüssel von einem Zertifizierungsdienstanbieter bei Bedarf zertifizieren lassen. Diese Ausbildung erfordert keinerlei Änderung der bestehenden Vertriebsstruktur für SIM-Karten, wobei insbesondere durch Verwendung eines sogenannten Null-Pin sichergestellt ist, dass keine Signaturen generiert werden, bevor der Benutzer die SIM-Karte in definierter Weise aktiviert hat. Zur Sicherstellung einer entsprechenden Manipulationssicherheit offenbart das Dokument fener einen Mikro-Kernel als Sicherheitsplattform für eine mobile Kommunikationseinrichtung. Dieser Mikro-Kemel übernimmt die Verwaltung des Geräts, Datei- Speicher- sowie Prozessverwaltung und wird vor dem Start des eigentlichen Betriebsystems der mobilen Kommunikationseinrichtung ausgeführt, sodass dieser entsprechend der Schichtarchitektur unterhalb des Betriebsystems angeordnet ist und somit einen sicherheitstechnisch gewährleisteten direkten Zugriff von Sicherheitsapplikationen auf die Hardware des Geräts ermöglicht.

Die vorliegende Erfindung unterscheidet sich von diesen bekannten Implementierungen durch eine technische Lösung für eine fortgeschrittene elektronische Signatur auf Basis individueller Zertifikate bzw. Schlüsselpaare. Anders als bei den bekannten Lösungen werden erfindungsgemäß die einzelnen Zertifikate nicht persönlich "ausgestellt", sondern werden als "One Time Certificates" jeweils nur zur Laufzeit des Signierungsvorgangs in der Signaturerstellungseinheit erstellt. Sie sind über die darüberliegende Anwendungsebene der Signaturerstellungseinheit dennoch dem jeweiligen Signator zugeordnet und stehen unter seiner alleinigen Kontrolle!

Der Vorteil dieser erfindungsgemäßen Lösung besteht darin, dass keine individuellen Zertifikate in Art einer "Public Key Infrastructure" verwaltet werden müssen. Zudem ist es durch die Erfindung erstmalig möglich, nur in Kenntnis eines selbst definierten Authentifizierungs-Codes, der das "Benutzerkonto" bzw. die Berechtigung des Unterzeichners zur Nutzung des Signaturdienstes schützt, die Erstellung der fortgeschrittenen elektronischen Signatur durchzuführen.

Das erfindungsgemäße Verfahren zur fortgeschrittenen elektronischen Signierung eines elektronischen Dokuments mittels einer Signaturerstellungseinheit zeichnet sich durch die im Anspruch 1 angeführten Merkmale auf. Das erfindungsgemäße Verfahren zur Prüfung eines gemäß dem obigen Verfahren elektronisch signierten elektronischen Dokuments ist durch die Verfahrensschritte des Anspruchs 11 definiert. Vorteilhafte Ausgestaltungen der Erfindung sind in den Unteransprüchen dargelegt.

Weitere Merkmale und Vorteile der Erfindung ergeben sich aus der nachfolgenden ausführlichen Beschreibung der Erfindung anhand von nicht einschränkenden Ausführungsbeispielen unter Bezugnahme auf die Zeichnungen.
Fig. 1 zeigt ein Schema des Verfahrensablaufs einer ersten Variante des erfindungsgemäßen Signaturverfahrens;
Fig. 2 zeigt ein Schema eines erfindungsgemäßen Prüfungsverfahrens eines gemäß der ersten Variante des Signaturverfahrens signierten elektronischen Dokuments;
Fig. 3 zeigt ein Schema des Verfahrensablaufs einer zweiten Variante des erfindungsgemäßen Signaturverfahrens;
Fig. 4 zeigt ein Schema eines Prüfungsverfahrens eines gemäß der zweiten Variante des Signaturverfahrens signierten elektronischen Dokuments;
Fig. 5 zeigt ein als Graphikelement aufbereitetes digitales Siegel.

Im Folgenden wird das erfindungsgemäße Verfahren zur fortgeschrittenen elektronischen Signierung eines elektronischen Dokuments in mehreren Varianten erläutert.

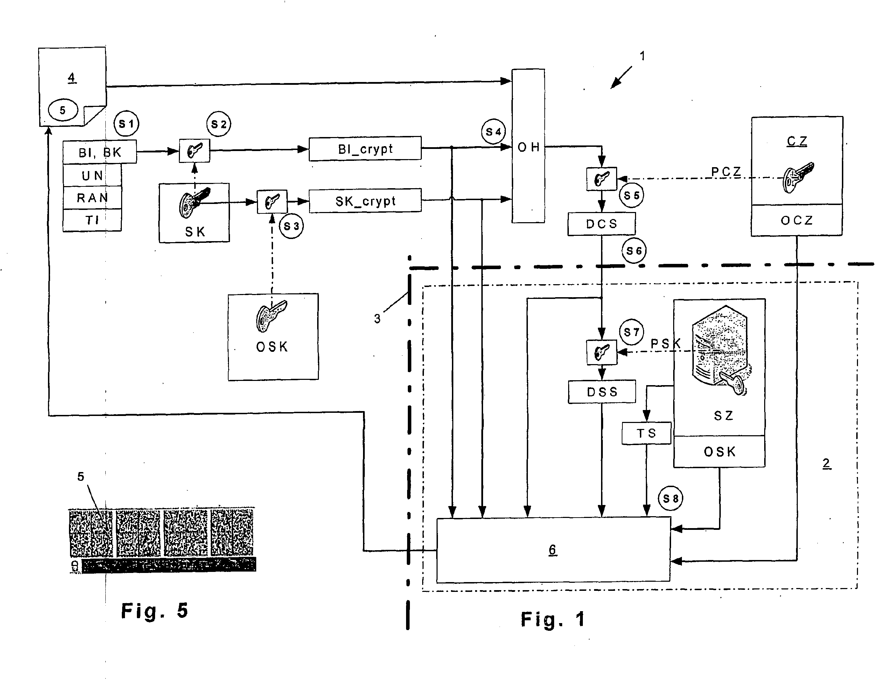

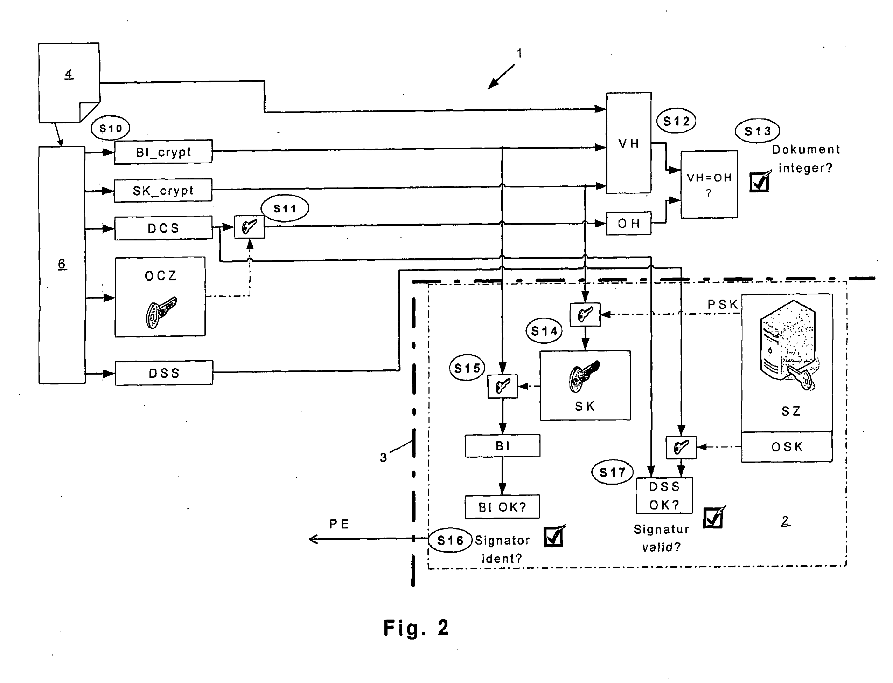

Dabei umfasst eine erste, weiter unten anhand von Fig. 1 im Detail dargestellte Variante des Signaturkonzepts eine zweistufige Signaturerstellung auf Basis gesicherter Benutzeridentifikationsdaten des Unterzeichners, wobei die Benutzeridentifikationsdaten in einem so genannten Benutzerkonto des Signators abgelegt werden. Die erste Stufe des Signaturerstellungsverfahrens wird in einer Signaturerstellungseinheit durchgeführt, die zweite Stufe des Verfahren in einem Signaturserver, der mit der Signaturerstellungseinheit online über eine Datenverbindung, wie z.B. das Internet, verbunden ist. Die Prüfung solcherart signierter elektronischer Dokumente erfolgt ebenfalls zweistufig, wie unten anhand der Fig. 2 im Detail erklärt, wobei eine erste Stufe in der Signaturerstellungseinheit abläuft und die zweite Stufe des Prüfungsverfahrens im Signaturserver abläuft.

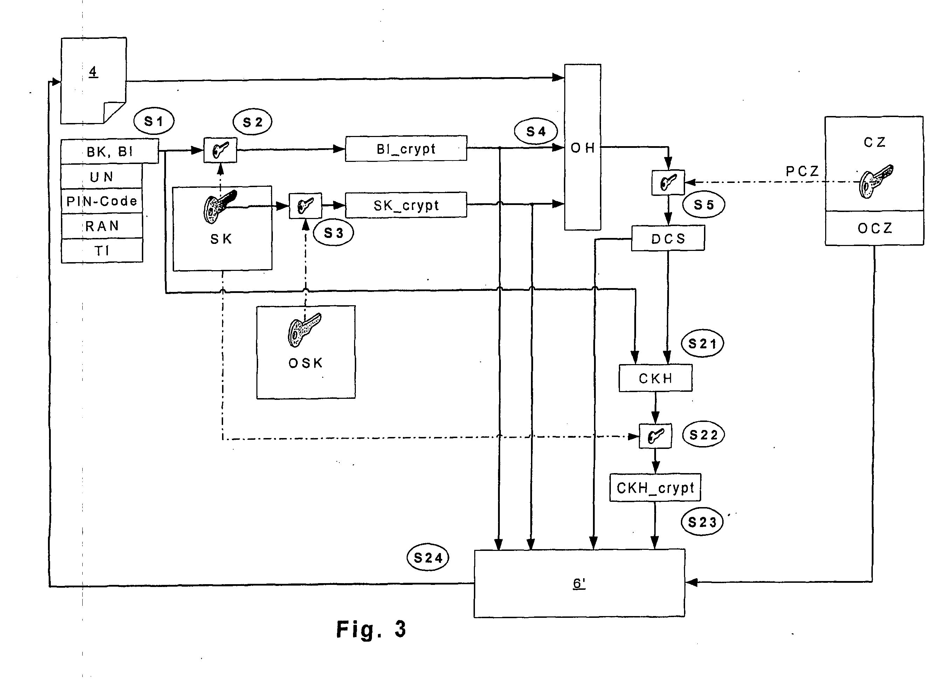

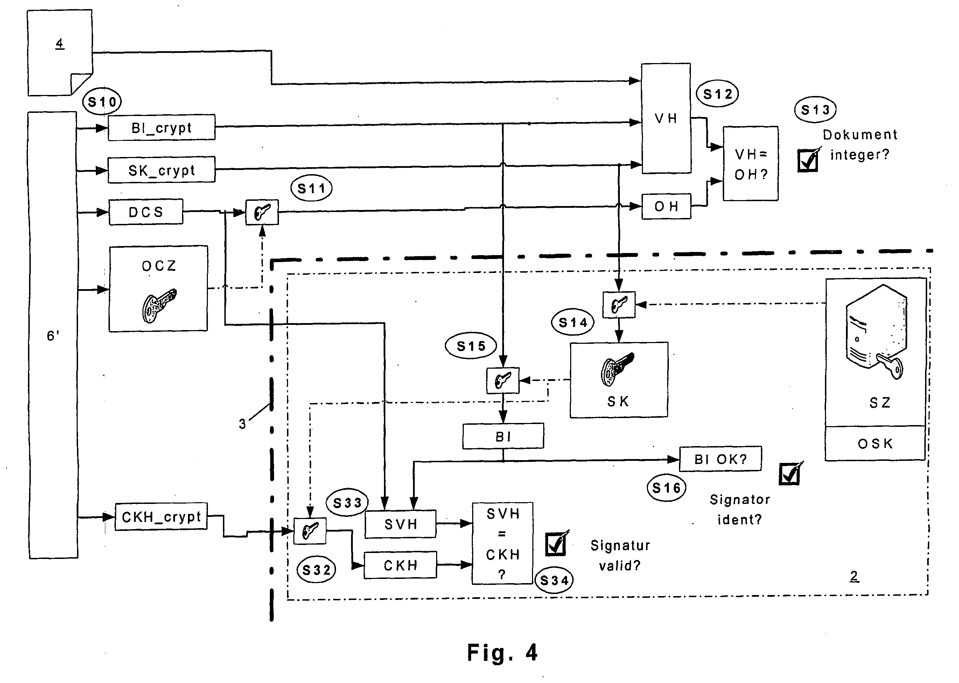

Eine zweite, in Fig. 3 im Detail dargestellte Variante des Signaturkonzepts umfasst eine einstufige Signaturerstellung in der Signaturerstellungseinheit. Da bei dieser Variante der Erfindung zur Signaturerstellung keine Datenverbindung zwischen Signaturerstellungseinheit und Signaturserver erforderlich ist, sondern die Signaturerstellung ausschließlich in der Signaturerstellungseinheit erfolgt, wird diese Variante der Erfindung auch "Offline-Signaturerstellung" genannt. Auch diese Variante der Signaturerstellung basiert auf gesicherten Benutzeridentifikationsdaten des Unterzeichners. Zur vollständigen Prüfung der gemäß der zweiten Variante der Erfindung signierten elektronischen Dokumente ist aber wiederum ein zweistufiges Prüfverfahren notwendig, das unten anhand der Fig. 4 erklärt wird, wobei eine erste Stufe in der Signaturerstellungseinheit abläuft und die zweite Stufe des Prüfungsverfahrens im Signaturserver abläuft.

Das grundlegende technische Konzept des erfindungsgemäßen Verfahrens zur fortgeschrittenen elektronischen Signierung eines elektronischen Dokuments mittels einer Signaturerstellungseinheit ist jedoch bei beiden Varianten sehr ähnlich. Es wird daher zunächst anhand der ersten Variante erläutert, und anschließend werden die Unterschiede der beiden Varianten ausführlich erklärt.

Die beim erfindungsgemäßen Verfahren zum Einsatz kommende Signaturerstellungseinheit umfasst vorzugsweise einen Computer, in dem das erfindungsgemäße Verfahren in Form eines Computerprogrammprodukts, das in einen Speicher des Computers geladen wird, abgearbeitet wird. Das Computerprogrammprodukt kann dabei z.B. auf computerlesbaren Medien gespeichert an die Benutzer, d.h. an die Signatoren, verteilt werden, es kann aber auch zum Download über das Internet etc. angeboten werden. Die Signaturerstellungseinheit arbeitet als "Client", weshalb in der folgenden Beschreibung dieser Begriff gleichbedeutend mit dem Begriff "Signaturerstellungseinheit" verwendet wird.

Damit die gesetzlichen Erfordernisse der fortgeschrittenen elektronischen Signatur erfüllt werden, ist die Identifizierbarkeit des Unterzeichners unerlässlich. Dazu müssen sich die Signatoren bei einem Signaturdiensteanbieter, der einen Signaturserver gemäß der vorliegenden Erfindung betreibt, anmelden. Die Identifizierung/Authentifizierung der Signatoren erfolgt bei Anmeldung zum Signaturdienst durch Vorlage eines gültigen amtlichen Lichtbildausweises bei einer Registrierungsstelle des Signaturdiensteanbieters. Die Ausweisleistung kann durch persönliches Erscheinen bei der Registrierungsstelle, oder auch per FAX erfolgen.

Aufgrund dieser Identifikation erhält der Benutzer einen Registrierungscode, der es ihm zunächst einmal prinzipiell ermöglicht, die Dienste des Signaturdiensteanbieters in Anspruch zu nehmen. Der Registrierungscode wird entweder in einem geschlossenen Kuvert dem Benutzer persönlich übergeben, oder z.B. per e-Mail an die bei der Anmeldung angegebene Adresse gesendet.

Der Registrierungscode berechtigt den Benutzer in dem Signaturserver einen Authentifizierungs-Code zu hinterlegen, der im Signaturserver unter einem Benutzerkonto, in dem auch weitere Daten des Benutzers abgelegt werden, gespeichert wird. Damit der Authentifizierungs-Code von Unbefugten durch Ausprobieren kaum erraten werden kann, sollte er zumindest 6-stellig sein. Allgemein ist es wichtig, dass der Authentifizierungs-Code durch geeignete Massnahmen vor Missbrauch zu schützen ist. Dazu zählt auch, dass der Authentifizierungs-Code am Signaturserver von keiner Instanz einsehbar bzw. änderbar ist. Aus diesem Grund wird der Authentifizierungs-Code am Signaturserver unter dem Benutzerkonto auch nicht im Klartext abgespeichert, sondern es wird lediglich der Hashwert des Authentifizierungs-Codes gespeichert, aus dem aber in weiterer Folge der Authentifizierungs-Code errechnet werden und somit der Benutzer über seinen Authentifizierungs-Code eindeutig identifiziert werden kann. Unter einem Hashwert versteht man eine Zahl oder eine Zeichenfolge, die mit einem Hash-Algorithmus aus einer gegebenen Zeichenfolge oder einem elektronischen Dokument errechnet wird. Vereinfacht gesagt ist ein Hashwert mit einer Prüfsumme vergleichbar. Anhand des Hashwerts kann man die ursprüngliche Zeichenfolge bzw. das elektronische Dokument eindeutig kennzeichnen und erkennen ("elektronischer Fingerabdruck").

In der Signaturerstellungseinheit, d.h. clientseitig, wird der Authentifizierungs-Code nicht gespeichert! Vielmehr ist der Authentifizierungs-Code vom Signator sorgfältig zu verwahren und wird jedes Mal bei der Benutzung der Signaturerstellungseinheit eingegeben.

Durch die Verwendung des Authentifizierungs-Codes wird letzlich die Benutzer-Authentifizierung sicher gestellt, indem bei einer Online-Datenverbindung zwischen der Signaturerstellungseinheit und dem Signaturserver eine Interaktion mit dem Signaturserver zur Erstellung einer elektronischen Signatur eines elektronischen Dokuments überhaupt ermöglicht wird, bzw. in der Offline-Variante, wie weiter unter beschrieben, eine Verknüpfung des Authentifizierungs-Codes mit der Signatur erfolgt.

Ein Benutzer kann unter Verwendung seines Authentifizierungs-Codes jederzeit direkt am Signaturserver sein Benutzerkonto sperren. Eine neuerliche Aktivierung des Benutzerkontos ist dann nicht mehr möglich.

Bei Verlust des Authentifizierungs-Codes kann in einem neuerlichen Registrierungsvorgang ein neuer Authentifizierungs-Code vergeben werden. Der alte Authentifizierungs-Code ist damit automatisch widerrufen und kann nicht mehr verwendet werden.

Erfindungsgemäß ist einem Signator bei dem vorgeschlagenen Verfahren kein dauerhaftes Schlüsselpaar allein zugeordnet.

Alle Signaturen werden entweder mit den Schlüsseln des Signaturservers, insbesondere mit den Schlüsseln eines von einer Zertifizierungsstelle für den Signaturserver vergebenen Server-Zertifikates vorgenommen, oder mit Hilfe von temporär erzeugten asymmetrischen Schlüsselpaaren, von denen der private Schlüssel jeweils nach der Signierung vernichtet wird. Der jeweilige öffentliche Schlüssel wird in dem signierten Dokument gespeichert, genauer gesagt, in einem in das elektronische Dokument eingebetteten digitalen Siegel (Erklärung erfolgt weiter unten).

Zusätzlich werden symmetrische Schlüssel zur Verschlüsselung von Authentifizierungsdaten verwendet. Diese sogenannten Sitzungsschlüssel werden nach ihrer Verwendung asymmetrisch verschlüsselt im digitalen Siegel und somit im signierten elektronische Dokument gespeichert und nach ihrer Verwendung vernichtet. Das heißt, die Sitzungsschlüssel werden originär an keiner Stelle verwaltet und können somit auch nicht ausgespäht werden.

Alternativ ist es denkbar, anstelle des temporären Schlüsselpaares eine Client-Signatur mit der lokal beim Benutzer verfügbaren Signaturerstellungseinrichtung (z.B. SmartCard) vorzunehmen.

Werden biometrische Merkmale aus Unterschriftendaten zur Authentifizierung des Signators verwendet, so werden die biometrischen Merkmale der Unterschrift in einem Fall - nämlich bei Signatorauthentifizierung zum Zeitpunkt der Registrierung- serverseitig am Signaturserver verwaltet. Im anderen Fall - nämlich bei Speicherung der Unterschriftenrohdaten im elektronischen Dokument zur nachträglichen Authentifizierung - werden die Rohdaten der Unterschrift symmetrisch verschlüsselt im elektronischen Dokument gespeichert, genauer gesagt, im eingebetteten digitalen Siegel.

Anhand der Fig. 1 wird nun die erste Variante des erfindungsgemäßen Verfahrens zur fortgeschrittenen elektronischen Signierung eines elektronischen Dokuments 4 mittels einer Signaturerstellungseinheit 1 im Detail erklärt.

Die Signierung des Dokumentes erfolgt in einem zweistufigen Prozess. Zunächst wird Client-seitig, d.h. in der allgemein mit dem Bezugszeichen 1 gekennzeichneten Signaturerstellungseinheit, ein gesichertes Benutzerkonto BK des Signators erzeugt. Das gesicherte Benutzerkonto BK enthält Benutzeridentifikationsdaten BI, nämlich einen Benutzemamen UN, eine (echte) Zufallszahl RAN sowie eine eindeutige Zeitinformation TI des Zeitpunkts der Signaturerstellung. Diese Benutzeridentifikationsdaten BI stellen eindeutige Identifizierungsdaten dar. Siehe Schritt S1 in Fig. 1.

Als nächstes wird lokal, d.h. in der Signaturerstellungseinheit 1, ein symmetrischer Sitzungsschlüssel SK erzeugt (z.B. 3DES, ...etc.). Dieser Sitzungsschlüssel SK wird in einem stochastischen Prozess rein zufällig generiert. Mit diesem Sitzungsschlüssel SK werden im Verfahrensschritt S2 die Benutzeridentifikationsdaten BI verschlüsselt

Der Sitzungsschlüssel SK wird in weiterer Folge mit dem öffentlichen Schlüssel OSK eines Signaturservers 2 asymmetrisch verschlüsselt, siehe Schritt S3 in Fig. 1.

Im nächsten Verfahrensschritt S4 erfolgt das Verknüpfen des Inhalts des elektronischen Dokuments 4, der mit dem Sitzungsschlüssel SK verschlüsselten Benutzeridentifikationsdaten BI (= Datenstrom BI_crypt in Fig. 1), und des asymmetrisch verschlüsselten Sitzungsschlüssels (= Datenstrom SK_crypt) zu einem gemeinsamen Datenstrom und danach das Bilden eines Original-Hashwertes OH aus diesem gemeinsamen Datenstrom mittels eines Hash-Algorithmus, z.B. mittels SHA-256 Algorithmus. Hash-Algorithmen, die in der Literatur auch als Hash-Funktionen bezeichnet werden, haben die Funktion, zu einem Input aus einer üblicherweise großen Quelldatenmenge einen Output aus einer (im Allgemeinen) kleinen Zieldatenmenge zu erzeugen, wobei diese Zieldatenmenge als Hashwert bezeichnet wird. Eine gute Hash-Funktion zeichnet sich dadurch aus, dass sie wenig Kollisionen erzeugt für genau die Inputs, für die sie entworfen wurde. Das bedeutet, dass es möglich ist, die meisten Inputs mit hinreichender Wahrscheinlichkeit an Hand ihres Hashwerts zu unterscheiden. Sehr gute Hash-Algorithmen sind die Algorithmen der SHA (Secure Hash Algorithm)-Familie, wobei für die vorliegende Anwendung derzeit der SHA-256-Algorithmus bevorzugt wird, der zur Berechnung 32 Bits lange Datenworte verwendet.

In weiterer Folge wird nun lokal in der Signaturerstellungseinheit 1 in einem Zufalls-Prozess ein "One time" Client-Zertifikat CZ erzeugt, das ein asymmetrisches Schlüsselpaar OCZ, PCZ besitzt. Mithilfe des privaten Schlüssels PCZ des Client Zertifikats CZ wird jetzt am Client 1 eine digitale Client-Signatur DCS gebildet, indem der Original-Hashwert OH mit dem privaten Schlüssel PCZ des nur lokal verfügbaren Schlüsselpaares OCZ, PCZ verschlüsselt wird. Siehe Schritt S5 in Fig. 1. Nach erfolgter Generierung- der digitalen Client-Signatur DCS wird sofort und nachhaltig der private Schlüssel PCZ vernichtet! Der so verwendete private Schlüssel PCZ ist also lediglich zum Zeitpunkt der Signaturerstellung existent und zu diesem Zeitpunkt unter alleiniger Kontrolle des Signators. Es ist sichergestellt, dass dieser Schlüssel nicht wieder verwendet werden kann! Damit liegt nun eine digitale Client-Signatur DCS vor, die sowohl den relevanten Dokumenteninhalt des elektronischen Dokuments 4, wie auch eine Verknüpfung mit den persönlichen Benutzeridentifikationsdaten BI des Signators enthält.

Im nächsten Schritt S6 werden die digitale Client-Signatur DCS sowie die mit dem Sitzungsschlüssel SK verschlüsselten Benutzeridentifikationsdaten BI (= Datenstrom BI_crypt), der asymmetrisch verschlüsselte Sitzungsschlüssel SK (=Datenstrom SK_crypt) und der öffentliche Schlüssel OCZ des asymmetrischen Einmalzertifikats CZ über eine sichere Datenverbindung 3 (z.B. https-Verbindung) zum Signaturserver 2 gesendet.

Im Signaturserver 2 wird zunächst die Zulässigkeit des Zugriffs des Signators über die Signaturerstellungseinheit 1 auf den Signaturserver 2 verifiziert, indem ein Authentifizierungs-Code überprüft wird, den der Signator bei der Inbetriebnahme der Signaturerstellungseinheit 1 einzugeben hatte. Dieser Authentifizierungs-Code kann entweder bereits als Bestandteil der Benutzeridentifikationsdaten BI mitgesendet worden sein, oder der Signaturserver 2 fragt diesen Authentifizierungs-Code von der Signaturerstellungseinheit 1 ab. Wie eingangs bereits erwähnt, ist im Signaturserver 2 ein Hashwert des Authentifizierungs-Codes abgespeichert, so dass durch Hashwertbildung des von der Signaturerstellungseinheit 1 empfangenen Authentifizierungs-Codes ein Vergleich möglich gemacht wird.

Wenn der Signator verifiziert worden ist, generiert der Signaturserver 2 eine digitale Server-Signatur DSS, indem er die von der Signaturerstellungseinheit 1 empfangene digitale Client-Signatur mit dem privaten Schlüssel PSK eines asymmetrischen Signaturserver-Schlüsselpaars OSK, PSK eines Serverzertifikats SZ verschlüsselt. Siehe Schritt S7.

Anschließend generiert der Signaturserver 2 im Verfahrensschritt S8 ein digitales Siegel 6, indem er die folgenden Daten zu einer Datei bzw. einem Datenstrom verknüpft:
- die mit dem Sitzungsschlüssel SK verschlüsselten Benutzeridentifikationsdaten BI,
- den mit dem öffentlichen Schlüssel OSK des Signaturservers verschlüsselten Sitzungsschlüssel SK,
- die digitale Client-Signatur DCS,
- die digitale Server-Signatur DSS,
- das Serverzertifikat SZ mit dem öffentlichen Schlüssel OSZ,
- den öffentlichen Schlüssel OCZ des in der Signaturerstellungseinheit erzeugten asymmetrischen Einmalzertifikats CZ, und
- einen Zeitstempel TS.

Das digitale Siegel 6 wird über die Datenverbindung 3 an die Signaturerstellungseinheit 1 zurückgesendet und dort in das elektronische Dokument 4 eingebettet. Es sei erwähnt, dass in einer Variante des erfindungsgemäßen Verfahrens auch das elektronische Dokument 4 an den Signaturserver gesandt werden kann, der dann die Einbettung des digitalen Siegels 6 vornimmt und das solcherart signierte Dokument 4 an die Signaturerstellungseinheit 1 zurücksendet. Aufgrund des erhöhten Datenübertragungsvolumens ist diese Variante allerdings nicht bevorzugt.

Das digitale Siegel 6 kann einerseits direkt in den Dokumenteninhalt oder das Dateiformat des elektronischen Dokuments eingebettet werden. Es kann aber andererseits auch als grafisches Element 5 aufbereitet werden, indem die im Siegel 6 enthaltenen Informationen in graphischer Form codiert werden und das grafische Element 5 in das elektronische Dokument 4 eingefügt wird, so dass es von Benutzern und Scannern lesbar und ausdruckbar ist. Eine derzeit bevorzugte Form des elektronischen Dokuments ist eine pdf-Datei. Es ist auch vorgesehen, unterschiedliche Dateiformate in pdf-Dateien umzuwandeln und das erstellte digitale Siegel in die pdf-Datei einzufügen, wobei neben einer Einfügung als Graphikelement 5 auch die Speicherung innerhalb eines pdf- signature Dictionaries bzw. eventuell auch in den pdf Metadaten vorgesehen ist.

Fig. 5 zeigt ein Beispiel eines als Graphikelement 5 aufbereiteten digitalen Siegels 6.

Die erfindungsgemäße fortgeschrittene Signaturerstellung bietet auch Schutz vor "Brute Force" Attacken auf den Authentifizierungs-Code, indem ein automatisiertes mehrfaches Ausprobieren des Authentifizierungs-Codes durch progressives Inkrementieren einer Wartezeit in der Signaturerstellungseinheit, sowie eine maximal mögliche Anzahl an Eingabeversuchen unterbunden wird. Nach einer definierten Anzahl an falschen Versuchen wird das Benutzerkonto BK automatisch gesperrt. Der entsprechende Authentifizierungs-Code wird widerrufen.

Die Prüfung des solcherart elektronisch signierten Dokuments 4 wird nun anhand des Schemas von Fig. 2 erklärt. Das Prüfverfahren ist ein zweistufiges Verfahren, wobei die erste Stufe des Prüfverfahrens in der Signaturerstellungseinheit 1 offline abgewickelt wird und die zweite Stufe in dem Signaturserver 2 abgewickelt wird, d.h. es muss eine Online-Verbindung zwischen Signaturerstellungseinheit 1 und Signaturserver 2 gegeben sein.

In der Offline-Stufe des Prüfverfahrens, die eine Dokumentenintegritätsprüfung darstellt, wird zunächst in einem Schritt S10 das digitale Siegel 6 aus dem elektronischen Dokument 4 extrahiert und seine Komponenten isoliert, insbesondere der Datenstrom BI_crypt der mit dem Sitzungsschlüssel SK verschlüsselten Benutzeridentifikationsdaten BI; der Datenstrom SK_crypt des mit dem öffentlichen Schlüssel OSK des Signaturservers 2 verschlüsselten Sitzungsschlüssels SK; die digitale Client-Signatur DCS; die digitale Server-Signatur DSS; und der öffentliche Schlüssel OCZ des in der Signaturerstellungseinheit erzeugten asymmetrischen Einmalzertifikats CZ.

Im nächsten Schritt S11 wird die digitale Client-Signatur DCS mit dem öffentlichen Schlüssel OCZ des seinerzeit bei der Dokumentensignierung in der Signaturerstellungseinheit erzeugten asymmetrischen Einmalzertifikats CZ entschlüsselt. Damit wird der Original-Hashwert OH verfügbar.

Im nächsten Schritt S12 wird nun aus dem Inhalt des elektronischen Dokumentes 4, den symmetrisch verschlüsselten Benutzerinformationsdaten BI, d.h. aus dem Datenstrom BI_crypt, sowie dem asymmetrisch verschlüsselten Sitzungsschlüssel SK, d.h. dem Datenstrom SK_crypt, ein Vergleichs-Hashwert VH ermittelt. Dieser Vergleichs-Hashwert VH wird im Schritt S 13 mit dem Original-Hashwert verglichen. Sind die beiden Hashwerte gleich, so ist dies ein Beleg für die Integrität des elektronischen Dokumentes 4.

Die weitere Prüfung erfolgt online in der zweiten Stufe, in der die Authentifizierung des Signators stattfindet. Dazu muss im nächsten Schritt S14 der Sitzungsschlüssel SK reproduziert werden, was nur in dem Signaturserver 2 möglich ist. Dazu sendet die Signaturerstellungseinheit 1 über eine sichere Online-Datenverbindung 3 (z.B. https-Verbindung) den im Datenstrom SK_crypt asymmetrisch verschlüsselten Sitzungsschlüssel SK zum Signaturserver 2. Dieser entschlüsselt mit seinem privaten Schlüssel PSK des Server Zertifikats SZ den Sitzungsschlüssel SK.

Mit dem nun bekannten Sitzungsschlüssel SK ist es möglich, den ebenfalls von der Signaturerstellungseinheit 1 an den Signaturserver 2 gesandten Datenstrom BI_crypt der verschlüsselten Benutzerinformationsdaten BI zu entschlüsseln (Schritt S15) und dadurch das Benutzerkonto BK zu prüfen (Schritt S16).

Wenn die Signaturerstellungseinheit 1 auch die digitale Server-Signatur DSS und die digitale Client-Signatur DCS an den Signaturserver 2 sendet, kann die Validität der digitalen Server-Signatur DSS ebenfalls im Signaturserver 2 überprüft werden, indem die Server-Signatur DSS mit dem öffentlichen Schlüssel OSZ des Serverzertifikates SZ entschlüsselt wird, wodurch die ursprüngliche Client-Signatur verfügbar wird, die mit der von der Signaturerstellungseinheit 1 übertragenen digitalen Client-Signatur DCS verglichen wird. Siehe Schritt S17. Das Prüfungsergebnis PE der Signatorauthentifizierungs- und Signaturvaliditätsprüfung wird vom Signaturserver 1 an die Signaturerstellungseinheit 1 zurückgesandt und dem Benutzer angezeigt.

Nun wird anhand des Schemas von Fig. 3 die zweite Variante des erfindungsgemäßen Verfahrens zur Erzeugung einer fortgeschrittenen elektronischen Signatur eines elektronischen Dokuments erläutert. Diese elektronische Signaturerstellung erfolgt in der Signaturerstellungseinheit 1 ohne Zugriff auf einen Signaturserver, d.h. offline, basiert aber ebenso wie die erste Variante auf gesicherten Benutzeridentifikationsdaten BI bzw. auf einem gesicherten Benutzerkonto BK.

Im Unterschied zur ersten Variante des erfindungsgemäßen Signaturerstellungsverfahrens wird bei der vorliegenden zweiten Variante auch der Authentifizierungs-Code des Signators, beispielsweise in Form eines PIN-Codes, in den Benutzeridentifikationsdaten BI und somit im Benutzerkonto BK mitgespeichert. Die Benutzeridentifikationsdaten BI gemeinsam mit dem PIN-Code sind in dieser Variante vergleichbar mit Rohdaten einer handschriftlichen Unterschrift des Signators.

Der Ablauf der elektronischen Signierung des Dokuments 4 ist bis zur Erzeugung der digitalen Client-Signatur DCS identisch mit den oben anhand der Fig. 1 beschriebenen Verfahrensschritten S1 bis S5. Es wird daher auf die obige Beschreibung verwiesen.

Obwohl diverse Algorithmen bei der Signaturerstellung einem potenziellen Angreifer nicht bekannt sind und die entsprechenden Zugänge zum Signaturserver nicht offen gelegt sind, wäre es theoretisch denkbar, dass ein Angreifer aus einem gemäß dem vorliegenden Verfahren signierten elektronischen Dokument die entsprechenden Informationen extrahiert und dann in Kenntnis des Authentifizierungs-Codes und unter Verwendung von Programmteilen der Signaturerstellungseinheit ein geändertes elektronisches Dokument mit den aus dem ursprünglichen signierten Dokument extrahierten Komponenten neuerlich einer elektronischen Signaturerstellung in der Signaturerstellungseinheit und am Signaturserver, zuführt.

Um auch dieses Szenario zu verhindern, wird in einer Fortbildung der Erfindung ein zusätzlicher Sicherheitsmechanismus implementiert, der darauf basiert, dass in einem Verfahrensschritt S21 aus den Benutzeridentifikationsdaten BI und der digitalen Client-Signatur DCS ein Client-Kontroll-Hashwert CKH erzeugt wird. Dieser Client-Kontroll-Hashwert CKH wird in einem Verfahrensschritt S22 mit dem nur zum Zeitpunkt der Signaturerstellung temporär verfügbaren Sitzungsschlüssel SK zu einem verschlüsselten Client-Kontroll-Hashwert CKH_crypt verschlüsselt.

Anschließend generiert die Signaturerstellungseinheit 1 im Verfahrensschritt S23 ein digitales Siegel 6', indem sie die folgenden Daten zu einer Datei oder einem Datenstrom verknüpft:
- die mit dem Sitzungsschlüssel SK verschlüsselten Benutzeridentifikationsdaten BI (= Datenstrom BK_crypt),
- den mit dem öffentlichen Schlüssel OSK eines Signaturservers verschlüsselten Sitzungsschlüssel SK (= Datenstrom SK_crypt),
- die digitale Client-Signatur DCS,
- den verschlüsselten Client-Kontroll-Hashwert CKH_crypt, und
- den öffentlichen Schlüssel OCZ des in der Signaturerstellungseinheit erzeugten asymmetrischen Einmalzertifikats CZ.

Das so erstellte digitale Siegel 6' wird in Verfahrensschritt S24 in das elektronische Dokument 4 eingebettet, das dadurch eine fortgeschrittene elektronische Signatur erhält.

Aufgrund dieser Vorsichtsmaßnahme ist es einem Angreifer nicht möglich Benutzerinformationen BI, die im digitalen Siegel 6' gespeichert sind, zu missbrauchen, weil der Signaturerstellungsvorgang und der verschlüsselte Client-Kontroll-Hashwert CKH_crypt auf dem gleichen Sitzungsschlüssel basieren, der nach der Signaturerstellung vernichtet wird. Damit ist sichergestellt, dass nach dem Vernichten des Sitzungsschlüssels SK keine neuerliche Signatur erstellt wurde, bzw. dass die Unterschriftendaten eindeutig mit dem vorliegenden Dokument verknüpft sind.

Die Prüfung des gemäß der zweiten Variante des erfindungsgemäßen Signaturerstellungsverfahrens elektronisch signierten Dokuments 4 entspricht weit gehend dem oben anhand der Fig. 2 erklären Prüfungsverfahren. Insbesondere sind die Verfahrensschritte S10 bis S 15 identisch, weshalb auf die obige Beschreibung verwiesen wird. Die Unterschiede zum ersten Prüfungsverfahren werden nun anhand des Schemas von Fig. 4 erläutert.

Grundsätzlich ist auch das in Fig. 4 gezeigte, zweite Prüfverfahren ein zweistufiges Verfahren, wobei die erste Stufe des Prüfverfahrens (Verfahrensschritte S10 bis S13) in der Signaturerstellungseinheit 1 offline abgewickelt wird und die zweite Stufe in dem Signaturserver 2 abgewickelt wird, d.h. es muss dazu eine Online-Datenverbindung 3 zwischen Signaturerstellungseinheit 1 und Signaturserver 2 gegeben sein, damit die Signaturerstellungseinheit 1 die Datenströme BI_crypt, SK_Crypt und die digitale Client-Signatur DCS an den Signaturserver 2 senden kann. Aus dem Datenstrom SK_crypt wird mithilfe des privaten Serverschlüssels PSK der Sitzungsschlüssel SK rekonstruiert (siehe Schritt S 14), und anschließend werden mithilfe des Sitzungsschlüssels SK aus dem Datenstrom BI_crypt die Benutzerinformationsdaten BI entschlüsselt (Schritt S 15) und diese mit den im Signaturserver 2 gespeicherten Informationen über das Benutzerkonto BK verglichen, wodurch eine Identifizierung des Signators erfolgt (Schritt S 16).

Weiters isoliert die Signaturerstellungseinheit 1 im Schritt S10 den verschlüsselten Client-Kontroll-Hashwert CKH_crypt aus dem digitalen. Siegel 6' und überträgt diesen verschlüsselten Client-Kontroll-Hashwert CKH_crypt an den Signaturserver 2. Der Signaturserver 2 entschlüsselt in Schritt S32 mithilfe des Sitzungsschlüssels SKden verschlüsselten Client-Kontroll-Hashwert CKH_crypt und gewinnt dadurch den Client-Kontroll-Hashwert CKH.

Weiters berechnet der Signaturserver 2 in Schritt S33 einen Signaturserver-Kontroll-Hashwert SVH aus den Benutzeridentifikationsdaten BI und der digitalen Client-Signatur DCS mittels desselben wie bei der Bildung des Client-Kontroll-Hashwerts CKH angewandten Algorithmus. Dieser Signaturserver-Kontroll-Hashwert SVH wird in Schritt S34 mit dem Client-Kontroll-Hashwert CKH verglichen und dadurch die Validität der digitalen Signatur festgestellt.

Alle vorgestellten Varianten des erfindungsgemäßen Verfahrens zur Erzeugung einer fortgeschrittenen elektronischen Signatur eines elektronischen Dokuments und des erfindungsgemäßen Verfahrens zur Prüfung eines solcherart elektronisch signierten elektronischen Dokuments eignen sich zur Durchführung von Massensignaturen und Massenprüfungen. Dazu muss gewährleistet sein, dass der Signator ausschließlich jene Dokumente signiert, die er auch bewusst signieren möchte. Dies kann z. B. durch eine quantitative und zeitliche Limitierung der Signaturvorgänge erfolgen. Zusätzlich werden zweckmäßig sämtliche zu signierenden Dokumente in ein sogenanntes "Active Signature Directory" am Client gestellt. Bei Auslösung eines Signaturprozesses mit der Eingabe des Authentifizierungs-Codes werden sämtliche (noch nicht signierten) Dokumente aus diesem Directory der Signatur zugeführt, ohne den Authentifizierungs-Code mehrmals eingeben zu müssen.

Es sei weiters erwähnt, dass in einer vorteilhaften Variante des Signaturerstellungsverfahrens in das elektronische Dokument 4 eine Adresse des Signaturservers 2, insbesondere eine Internetadresse, eingefügt wird, die beim Aufrufen des Prüfungsverfahrens automatisch angewählt wird. In einer besonders bevorzugten Variante ist die Adresse des Signaturservers 2 als Link in das elektronische Dokument eingebettet und kann vom Benutzer durch Anklicken dieses Links das Prüfverfahren gestartet werden.

## Patentansprüche

1. Verfahren zur Erzeugung einer fortgeschrittenen elektronischen Signatur eines elektronischen Dokuments (4) mittels einer Signaturerstellungseinheit (1), **gekennzeichnet durch**:
das Erzeugen von eindeutigen Benutzeridentifikationsdaten (BI) eines Unterzeichners, wobei zumindest eine Untermenge der Benutzeridentifikationsdaten auch und vorzugsweise in verschlüsselter Form in einem entfernten Signaturserver (2) gespeichert wird;
das Erzeugen eines, vorzugsweise symmetrischen, Sitzungsschlüssels (SK), der einmalig bei der Erstellung einer Signatur benutzt wird;
das Verschlüsseln (BI_crypt) der Benutzeridentifikationsdaten (BI) mit dem Sitzungsschlüssel (SK);
das asymmetrische Verschlüsseln (SK_crypt) des Sitzungsschlüssels (SK) mit einem öffentlichen Schlüssel (OSK) eines Signaturservers (2);
das Verknüpfen des Inhalts des elektronischen Dokuments (4), der mit dem Sitzungsschlüssel verschlüsselten (BI_crypt) Benutzeridentifikationsdaten (BI), und des asymmetrisch verschlüsselten (SK_crypt) Sitzungsschlüssels (SK) zu einem Datenstrom und das Bilden eines Original-Hashwertes (OH) aus dem Datenstrom mittels eines Hash-Algorithmus, z.B. mittels SHA-256 Algorithmus;
das Erzeugen eines asymmetrischen Einmalzertifikat-Schlüsselpaars (PCZ, OCZ);
das Generieren einer digitalen Client-Signatur (DCS) **durch** Verschlüsseln des Original Hashwerts (OH) mit dem privaten Schlüssel (PCZ) des Einmalzertifikat-Schlüsselpaars;
das Generieren eines digitalen Siegels (6, 6') **durch** Zusammenstellen folgender Daten:
• die mit dem Sitzungsschlüssel verschlüsselten (BI_crypt) Benutzeridentifikationsdaten (BI),
• der mit dem öffentlichen Schlüssel eines Signaturservers verschlüsselte (SK_crypt)
Sitzungsschlüssel (SK),
• die digitale Client-Signatur (DCS), und
• der öffentliche Schlüssel (OCZ) des asymmetrischen Einmalzertifikat-Schlüsselpaars,
wobei das Generieren des digitalen Siegels (6, 6') in der Signaturerstellungseinheit (1) oder in einem über eine Datenverbindung (3) mit der Signaturerstellungseinheit verbindbaren Signaturserver (2) erfolgt;
das Einbetten des digitalen Siegels (6, 6') in das elektronische Dokument (4).

2. Verfahren nach Anspruch 1, **dadurch gekennzeichnet, dass** das digitale Siegel (6, 6') als grafisches Element (5) aufbereitet wird, in das in maschinenlesbarer Form die Daten des digitalen Siegels codiert sind, und das grafische Element (5) in das elektronische Dokument (4) eingefügt wird.

3. Verfahren nach Anspruch 1, **dadurch gekennzeichnet, dass** in das elektronische Dokument (4) eine Adresse des Signaturservers, insbesondere eine Internetadresse, eingefügt wird.

4. Verfahren nach einem der vorhergehenden Ansprüche, **dadurch gekennzeichnet, dass** die Benutzeridentifikationsdaten (BI) eine Benutzer-Kennung (UN) bzw. eine Benutzerkonto-Kennung, und/oder Zufallszahl (RAN) und/oder biometrische Daten, z.B. biometrische Merkmale aus Unterschriftendaten und/oder einen Zeitstempel (TI) des Zeitpunkts der Signaturerstellung umfassen.

5. Verfahren nach einem der vorhergehenden Ansprüche, **dadurch gekennzeichnet, dass** die Benutzeridentifikationsdaten (BI) einen Authentifizierungs-Code (PIN-Code) des Signators umfassen.

6. Verfahren nach einem der vorhergehenden Ansprüche, **dadurch gekennzeichnet, dass**, wenn das Generieren des digitalen Siegels (6) in dem Signaturserver (2) erfolgt, eine digitale Server-Signatur (DSS) sowie optional ein Zeitstempel (TS) in das digitale Siegel eingefügt wird.

7. Verfahren nach Anspruch 6, **dadurch gekennzeichnet, dass** die digitale Server-Signatur (DSS) durch Verschlüsseln der digitalen Client-Signatur (DCS) mit dem privaten Schlüssel (PSK) eines asymmetrischen Signaturserver-Schlüsselpaars (PSK, OSK), vorzugsweise eines Zertifikat-Schlüsselpaars, erzeugt wird.

8. Verfahren nach Anspruch 6 oder 7, **dadurch gekennzeichnet, dass** in das digitale Siegel (6) ein für den Signaturserver ausgestelltes Zertifikat (SZ) sowie optional ein öffentlicher Schlüssel (OSZ) eines Zertifikat-Schlüsselpaars des Zertifikats (SZ) eingefügt wird.

9. Verfahren nach einem der Ansprüche I bis 5, **dadurch gekennzeichnet, dass**, wenn das Generieren des digitalen Siegels (6') in der Signaturerstellungseinheit (1) erfolgt, aus den Benutzeridentifikationsdaten (BI) und der digitalen Client-Signatur (DCS) ein Client-Kontroll-Hashwert CKH erzeugt und in das digitale Siegel eingefügt wird.

10. Verfahren nach Anspruch 9, **dadurch gekennzeichnet, dass** der Client-Kontroll-Hashwert (CKH) vor dem Einfügen in das digitale Siegel (6') mit dem Sitzungsschlüssel (SK) verschlüsselt (CKH_crypt) wird.

11. Verfahren zur Prüfung eines gemäß dem Verfahren nach einem der Ansprüche 1 bis 10 elektronisch signierten elektronischen Dokuments (4) mittels einer Signaturerstellungseinheit (1); **gekennzeichnet durch**
das Extrahieren eines digitalen Siegels (6, 6') aus dem elektronischen Dokument (4) und das Isolieren folgender Daten aus dem digitalen Siegel:
• die mit einem Sitzungsschlüssel (SK) verschlüsselten (BI_crypt)
Benutzeridentifikationsdaten (BI),
• der mit einem öffentlichen Schlüssel (OSK) eines Signaturservers (2) verschlüsselte (SK_crypt) Sitzungsschlüssei (SK),
• eine digitale Client-Signatur (DCS), und
• einen öffentlichen Schlüssel (OCZ) eines asymmetrischen Einmalzertifikat-Schlüsselpaars (OCZ, PCZ);
das Entschlüsseln der digitalen Client-Signatur (DCS) mit dem öffentlichen Schlüssel (OCZ) des Einmalzertifikat-Schlüsselpaars, wodurch ein in der digitalen Client-Signatur codierter Original-Hashwert (OH) verfügbar wird;
das Bilden eines Vergleichs-Hashwerts (VH) **durch** das Verknüpfen des Inhalts des elektronischen Dokuments (4), der mit dem Sitzungsschlüssel verschlüsselten (BI_crypt) Benutzeridentifikationsdaten (BI), und des asymmetrisch verschlüsselten (SK_crypt) Sitzungsschlüssels (SK) zu einem Datenstrom und Berechnen des Vergleichs-Hashwertes (VH) aus dem Datenstrom mittels des bei der Bildung des Original-Hashwerts (OH) angewandten Hash-Algorithmus;
das Vergleichen des Original-Hashwerts (OH) mit dem Vergleichs-Hashwert (VH), wobei bei Übereinstimmung die Integrität des elektronischen Dokuments (4) gegeben ist.

12. Verfahren nach Anspruch 11, **gekennzeichnet durch** das Übertragen der mit dem Sitzungsschlüssel verschlüsselten (BI_crypt) Benutzeridentifikationsdaten und des mit dem öffentlichen Schlüssel des Signaturservers verschlüsselten (SK_crypt) Sitzungsschlüssels an den Signaturserver (2), worauf **durch** den Signaturserver (2) der Sitzungsschlüssel (SK) mit dem privaten Schlüssel (PSK) des Signaturservers entschlüsselt wird und mit dem nun verfügbaren Sitzungsschlüssel die Benutzeridentifikationsdaten (BI) entschlüsselt werden und aus den Benutzeridentifikationsdaten (BI) die Identität des Unterzeichners geprüft wird.

13. Verfahren nach Anspruch 11 oder 12 in Verbindung mit Anspruch 6, **gekennzeichnet durch** das Isolieren der digitalen Server-Signatur (DSS) aus dem digitalen Siegel (6), das Übertragen der digitalen Server-Signatur (DSS) an den Signaturserver (2) und das Vergleichen der digitalen Server-Signatur (DSS) bzw. der darin enthaltenen Daten im Signaturserver mit einer im Signaturserver gespeicherten Server-Signatur bzw, den darin enthaltenen Daten.

14. Verfahren nach Anspruch 13 in Verbindung mit Anspruch 7, **dadurch gekennzeichnet, dass** im Signaturserver (2) die empfangene digitale Server-Signatur (DSS) mit dem zugehörigen öffentlichen Schlüssel (OSK) entschlüsselt und die **dadurch** verfügbare digitale Client-Signatur mit der aus dem digitalen Siegel isolierten digitalen Client-Signatur (DCS) auf Übereinstimmung verglichen wird.

15. Verfahren nach Anspruch 12 in Verbindung mit Anspruch 9, **gekennzeichnet durch** das Isolieren des Client-Kontroll-Hashwerts (CKH, CKH_crypt) aus dem digitalen Siegel (6'), das Übertragen des Client-Kontroll-Hashwerts (CKH, CKH_crypt) an den Signaturserver (2), das signaturserverseitige Berechnen eines Signaturserver-Kontroll-Hashwerts (SVH) aus den Benutzeridentifikationsdaten (BI) und der digitalen Client-Signatur (DCS) mittels des bei der Bildung des Client-Kontroll-Hashwerts (CKH) angewandten Hash-Algorithmus und das Vergleichen des Client-Kontroll-Hashwerts (CKH) mit dem Signaturserver-KontrollHashwert (SVH).

16. Verfahren nach Anspruch 15 in Verbindung mit Anspruch 10, **dadurch gekennzeichnet, dass** der verschlüsselte Client-Kontroll-Hashwert (CKH_crypt) im Signaturserver (2) mit dem reproduzierten Sitzungsschlüssel (SK) entschlüsselt wird.

17. Computerprogrammprodukt, das in einen Speicher eines Computers ladbar ist, **gekennzeichnet durch** Softwarecodeabschnitte zur Durchführung der Schritte des Verfahrens gemäß den Ansprüchen 1 bis 16, wenn das Computerprogrammprodukt in dem Computer abgearbeitet wird.

18. Computerprogrammprodukt nach Anspruch 17, wobei das Computerprogrammprodukt auf einem computerlesbaren Medium gespeichert ist.

19. Signaturerstellungseinheit (1) mit einer Recheneinheit und einem internen Speicher zur Durchführung eines Verfahrens gemäß den Ansprüchen 1 bis 16.

## Claims

1. Method of generating an advanced electronic signature of an electronic document (4) by means of a signature generating unit (1), **characterised by**:
generating unambiguous user identification data (B1) of a signer, whereby at least a subset of the user identification data is stored in a remote signature server (2), also and preferably in encrypted form;
generating a, preferably symmetric, session key (SK) which is used once when creating a signature;
encrypting (BI_crypt) the user identification data (BI) with the session key (SK);
asymmetrically encrypting (SK_crypt) the session key (SK) with a public key (OSK) of a signature server (2);
linking the content of the electronic document (4), the user identification data (BI) encrypted (BI_crypt) with the session key and the asymmetrically encrypted (SK_crypt) session key (SK) into a data stream and creating an original hash value (OH) from the data stream by means of a hash algorithm, e.g. by means of the SHA-256 algorithm;
generating an asymmetric unique certificate-key pair (PCZ, OCZ);
generating a digital client signature (DCS) by encrypting the original hash value (OH) with the private key (PCZ) of the unique certificate-key pair;
generating a digital seal (6, 6') by compiling the following data:
• the user identification data (BI) encrypted (BI_crypt) with the session key;
• the session key (SK) encrypted (SK_crypt) with the public key of a signature server;
• the digital client signature (DCS) and
• the public key (OCZ) of the asymmetric unique certificate-key pair,
which digital seal (6, 6') is generated in the signature generating unit (1) or in a signature server (2) which can be connected to the signature generating unit via a data connection (3);
embedding the digital seal (6, 6') in the electronic document (4).

2. Method as claimed in claim 1, **characterised in that** the digital seal (6, 6') is processed as a graphic element (5) in which the data of the digital seal is encoded in machine-readable format, and the graphic element (5) is inserted in the electronic document (4).

3. Method as claimed in claim 1, **characterised in that** an address of the signature server, in particular an internet address, is inserted in the electronic document (4).

4. Method as claimed in one of the preceding claims, **characterised in that** the user identification data (BI) comprises a user code (UN) or a user identification code and/or a random number (RAN) and/or biometric data, e.g. biometric features from signature data and/or a time stamp (TI) of the instant at which the signature was created.

5. Method as claimed in one of the preceding claims, **characterised in that** the user identification data (BI) comprises an authentication code (PIN code) of the signatory.

6. Method as claimed in one of the preceding claims, **characterised in that** if the digital seal (6) is generated in the signature server (2), a digital server signature (DSS) and optionally a time stamp (TS) is inserted in the digital seal.

7. Method as claimed in claim 6, **characterised in that** the digital server signature (DSS) is created by encrypting the digital client signature (DCS) with the private key (PSK) of an asymmetric signature server-key pair (PSK, OSK), preferably a certificate-key pair.

8. Method as claimed in claim 6 or 7, **characterised in that** a certificate (SZ) issued for the signature server and optionally a public key (OSZ) of a certificate-key pair of the certificate (SZ) is inserted in the digital seal (6).

9. Method as claimed in one of claims 1 to 5, **characterised in that** if the digital seal (6') is generated in the signature generating unit (1), a client control hash value (CKH) is generated from the user identification data (BI) and digital client signature (DCS) and inserted in the digital seal.

10. Method as claimed in claim 9, **characterised in that** the client control hash value (CKH) is encrypted (CKH_crypt) with the session key (SK) before being inserted in the digital seal (6').

11. Method of checking an electronic document (4) electronically signed using the method as claimed in one of claims 1 to 10 by means of the signature generating unit (1), **characterised by**
extracting a digital seal (6, 6') from the electronic document (4) and isolating the following data from the digital seal:
• the user identification data (BI) encrypted (BI_crypt) with a session key (SK),
• the session key (SK) encrypted (SK_crypt) with a public key (OSK) of a signature server (2),
• a digital client signature (DCS) and
• a public key (OCZ) of an asymmetric unique certificate-key pair (OCZ, PCZ);
decrypting the digital client signature (DCS) with the public key (OCZ) of the unique certificate-key pair, thereby making an original hash value (OH) encoded in the digital client signature available;
forming a comparative hash value (VH) by linking the content of the electronic document (4), the user identification data (BI) encrypted (BI_crypt) with the session key and the asymmetrically encrypted (SK_crypt) session key (SK) into a data stream and calculating the comparative hash value (VH) from the data stream by means of the hash algorithm used to create the original hash value (OH);
comparing the original hash value (OH) with the comparative hash value (VH) and, in the event of a match, confirming the integrity of the electronic document (4).

12. Method as claimed in claim 11, **characterised by** transmitting the user identification data encrypted (BI_crypt) with the session key and the session key encrypted (SK_crypt) with the public key of the signature server to the signature server (2), whereupon the session key (SK) is decrypted by the signature server (2) with the private key (PSK) of the signature server and the user identification data (BI) is decrypted using the session key now available, and the identity of the signer is checked from the user identification data (BI).

13. Method as claimed in claim 11 or 12 in conjunction with claim 6, **characterised by** isolating the digital server signature (DSS) from the digital seal (6), transmitting the digital server signature (DSS) to the signature server (2) and comparing the digital server signature (DSS) and the data contained in it, respectively in the signature server with data stored in the signature server and contained in it.

14. Method as claimed in claim 13 in conjunction with claim 7, **characterised in that** the digital server signature (DSS) received in the signature server (2) is decrypted using the associated public key (OSK) and the digital client signature made available as a result is compared with the digital client signature (DCS) isolated from the digital seal to ascertain whether there is a match.

15. Method as claimed in claim 12 in conjunction with claim 9, **characterised by** isolating the client control hash value (CKH, CKH_crypt) from the digital seal (6'), transmitting the client control hash value (CKH, CKH_crypt) to the signature server (2),calculating in the signature server a signature server control hash value (SVH) from the user identification data (BI) and digital client signature (DCS) by means of the hash algorithm used to create the client control hash value (CKH) and comparing the client control hash value (CKH) with the signature server control hash value (SVH).

16. Method as claimed in claim 15 in conjunction with claim 10, **characterised in that** the encrypted client control hash value (CKH_crypt) is decrypted in the signature server (2) with the reproduced session key (SK).

17. Computer programme product which can be loaded into the memory of a computer, **characterised by** software code portions for implementing the steps of the method as claimed in claim 1 to 16 when the computer programme product is run in the computer.

18. Computer programme product as claimed in claim 17, which computer programme product is stored on a computer-readable medium.

19. Signature generating unit (1) with a computer unit and an internal memory for implementing a method as claimed in claims 1 to 16.

## Revendications

1. Procédé pour générer une signature électronique avancée d'un document (4) électronique au moyen d'une unité d'établissement de signature (1), **caractérisé par**:
la génération de données d'identification d'utilisateur (B1) définies d'un signataire, au moins une sous-quantité des données d'identification d'utilisateur étant mémorisée également et de préférence sous forme codée dans un serveur de signature (2) éloigné;
la génération d'un code de séance (SK), de préférence symétrique, qui est utilisé de façon unique lors de l'établissement d'une signature;
le codage (B1_crypt) des données d'identification d'utilisateur (BI) avec le code de séance (SK);
le codage (SK_crypt) asymétrique du code de séance (SK) avec un code public (OSK) d'un serveur de signature (2);
l'association du contenu du document (4) électronique, des données d'identification d'utilisateur (BI) codées (BI_crypt) avec le code de séance, et du code de séance (SK) codé (SK_crypt) de façon asymétrique en un flux de données et la formation d'une valeur de hachage d'origine (OH) à partir du flux de données au moyen d'un algorithme de hachage, par exemple au moyen de l'algorithme SHA-256;
la génération d'une paire de codes à certificat unique asymétrique (PCZ, OCZ);
la génération d'une signature de client numérique (DCS) par codage de la valeur de hachage d'origine (OH) avec la clé privée (PCZ) de la paire de codes à certificat unique;
la génération d'un cachet (6, 6') numérique par l'établissement des données suivantes:
• les données d'identification d'utilisateur (BI) codées (BI_crypt) avec le code de séance,
• le code de séance (SK) codé (SK_crypt) avec le code public d'un serveur de signature,
• la signature client (DCS) numérique, et
• le code (OCZ) public de la paire de codes à certificat unique asymétrique,
la génération du cachet (6, 6') numérique s'effectuant dans l'unité d'établissement de signature (1) ou dans un serveur de signature (2) pouvant être relié par une liaison de données (3) à l'unité d'établissement de signature;
l'intégration du cachet (6, 6') numérique dans le document (4) électronique.

2. Procédé selon la revendication 1, **caractérisé en ce que** le cachet (6, 6') numérique est préparé sous forme d'élément graphique (5), dans lequel les données du cachet numérique sont codées dans une forme pouvant être lue à la machine et l'élément (5) graphique étant inséré dans le document (4) électronique.

3. Procédé selon la revendication 1, **caractérisé en ce qu'**une adresse du serveur de signature, en particulier une adresse Internet, est insérée dans le document électronique (4).

4. Procédé selon l'une quelconque des revendications précédentes, **caractérisé en ce que** les données d'identification d'utilisateur (BI) comprennent une identification d'utilisateur (UN) ou une identification de compte d'utilisateur et/ou un nombre aléatoire (RAN) et/ou des données biométriques, par exemple des caractéristiques biométriques à partir de données de signature et/ou un chronotimbre (TI) du moment de l'établissement de la signature.

5. Procédé selon l'une quelconque des revendications précédentes, **caractérisé en ce que** les données d'identification d'utilisateur (BI) comprennent un code d'identification (Code PIN) du signataire.

6. Procédé selon l'une quelconque des revendications précédentes, **caractérisé en ce que**, lorsque la génération du cachet (6) numérique s'effectue dans le serveur de signature (2), une signature de serveur numérique (DSS) et en option un chronotimbre (TS) sont insérés dans le cachet numérique.

7. Procédé selon la revendication 6, **caractérisé en ce que** la signature de serveur (DSS) numérique est générée par codage de la signature de client (DCS) numérique avec le code privé (PSK) d'une paire de codes de serveur de signature (PSK, OSK) asymétrique, de préférence d'une paire de codes à certificat.

8. Procédé selon la revendication 6 ou 7, **caractérisé en ce qu'**un certificat (SZ) délivré pour le serveur de signature et en option un code public (OSZ) d'une paire de codes à certificat du certificat (SZ) sont insérés dans le cachet (6) numérique.

9. Procédé selon l'une quelconque des revendications 1 à 5, **caractérisé en ce que**, lorsque la génération du sceau (6') numérique s'effectue dans l'unité d'établissement de signature (1), une valeur de hachage de contrôle de client CKH est générée à partir des données d'identification d'utilisateur (BI) et de la signature de client numérique (DCS) et est insérée dans le cachet numérique.

10. Procédé selon la revendication 9, **caractérisé en ce que** la valeur de hachage de contrôle de client (CKH) est codée (CKH_crypt) avant l'insertion dans le cachet (6') numérique avec le code de séance (SK).

11. Procédé pour le contrôle d'un document (4) électronique signé de façon électronique selon le procédé selon l'une quelconque des revendications 1 à 10 au moyen d'une unité d'établissement de signature (1), **caractérisé par**
l'extraction d'un cachet (6, 6') numérique à partir du document (4) électronique et l'isolement des données suivantes à partir du cachet numérique:
• les données d'identification d'utilisateur (BI) codées (BI_crypt) avec un code de séance (SK),
• le code de séance (SK) codé (SK_crypt) avec un code public (OSK) d'un serveur de signature (2),
• une signature de client numérique (DCS), et
• un code (OCZ) public d'une paire de codes à certificat unique (OCZ, PCZ) asymétrique;
le décodage de la signature de client numérique (DCS) avec le code (OCZ) public de la paire de codes à certificat unique, de sorte qu'une valeur de hachage d'origine (OH) codée dans la signature de client numérique devient disponible;
la formation d'une valeur de hachage de comparaison (VH) par l'association du contenu du document (4) électronique, des données d'identification d'utilisateur (BI) codées (BI_crypt) avec le code de séance, et du code de séance (SK) codé (SK_crypt) de façon asymétrique en un flux de données et calcul de la valeur de hachage de comparaison (VH) à partir du flux de données au moyen de l'algorithme de hachage appliqué lors de la formation de la valeur de hachage d'origine (OH);
la comparaison de la valeur de hachage d'origine (OH) avec la valeur de hachage de comparaison (VH), l'intégrité du document (4) électronique étant donnée en cas de concordance.

12. Procédé selon la revendication 11, **caractérisé par** la transmission des données d'identification d'utilisateur codées (BI_crypt) avec le code de séance et du code de séance codé (SK_crypt) avec le code public du serveur de signature au serveur de signature (2), après quoi le code de séance (SK) est décodé par le serveur de signature (2) avec le code PSK) privé du serveur de signature et les données d'identification d'utilisateur (BI) sont décodées avec le code de séance alors disponible et l'identité de l'utilisateur est contrôlée à partir des données d'identification d'utilisateur (BI).

13. Procédé selon la revendication 11 ou 12 en liaison avec la revendication 6, **caractérisé par** l'isolation de la signature de serveur numérique (DSS) à partir du cachet numérique (6), la transmission de la signature de serveur numérique (DSS) au serveur de signature (2) et la comparaison de la signature de serveur numérique (DSS) et des données incluses dedans dans le serveur de signature avec une signature de serveur stockée dans le serveur de signature ou avec les données incluses dedans.

14. Procédé selon la revendication 13 en liaison avec la revendication 7, **caractérisé en ce que** la signature de serveur numérique (DSS) reçue est décodée dans le serveur de signature (2) avec le code public (OSK) spécifique et la signature de client numérique ainsi disponible est comparée au niveau de la concordance avec la signature de client numérique (DCS) isolée à partir du cachet numérique.

15. Procédé selon la revendication 12 en liaison avec la revendication 9, **caractérisé par** l'isolation de la valeur de hachage de contrôle de client (CKH, CKH_crypt) à partir du cachet (6') numérique, la transmission de la valeur de hachage de contrôle de client (CKH, CKH_crypt) au serveur de signature (2), le calcul côté serveur de signature d'une valeur de hachage de contrôle de serveur de signature (SVH) à partir des données d'identification d'utilisateur (BI) et de la signature de client numérique (DCS) au moyen de l'algorithme de hachage appliqué lors de la formation de la valeur de hachage de contrôle de client (CKH) et la comparaison de la valeur de hachage de contrôle client (CKH) avec la valeur de hachage de contrôle du serveur de signature (SVH).

16. Procédé selon la revendication 15 en liaison avec la revendication 10, **caractérisé en ce que** la valeur de hachage de contrôle de client (CKH_crypt) codée est décodée dans le serveur de signature (2) avec le code de séance (SK) reproduit.

17. Produit de programme informatique, qui peut être chargé dans une mémoire d'un ordinateur, **caractérisé par** des parties de code de logiciel pour la mise en oeuvre des étapes du procédé selon les revendications 1 à 16, lorsque le produit de programme informatique est traité dans l'ordinateur.

18. Produit de programme informatique selon la revendication 17, le produit de programme informatique étant mémorisé sur un support pouvant être lu par l'ordinateur.

19. Unité d'établissement de signature (1) dotée d'une unité de calcul et d'une mémoire interne pour la mise en oeuvre d'un procédé selon les revendications 1 à 16.
